# EUROPÄISCHE PATENTSCHRIFT

(11) **EP 2 555 893 B1**
(45) Veröffentlichungstag und Bekanntmachung des Hinweises auf die Patenterteilung: **06.07.2016**
(21) Anmeldenummer: 11714728.0
(22) Anmeldetag: 04.04.2011
(51) Int. Cl.: B23B 31/00, B23D 77/06

(54) **STUFENWERKZEUG**
STEP TOOL
OUTIL ETAGE

(30) Priorität: 01.04.2011 DE 102011001742; 08.04.2010 DE 102010014186; 03.04.2010 DE 102010014011
(43) Veröffentlichungstag der Anmeldung: 13.02.2013
(73) Patentinhaber: Gühring oHG, 72458 Albstadt (DE)
(72) Erfinder: BOZKURT, Lutfi, 72474 Winterlingen (DE)
(74) Vertreter: Meitinger, Thomas Heinz
(86) Internationale Anmeldenummer: PCT/EP2011/055223
(87) Internationale Veröffentlichungsnummer: WO 2011/121139

(56) Entgegenhaltungen:
- DE-A1- 19 719 892
- DE-U1-202007 015 595
- US-A1- 2007 031 199
- US-A1- 2007 081 871

## Beschreibung

### GEBIET DER ERFINDUNG

Die vorliegende Erfindung betrifft ein Stufenwerkzeug gemäß dem Oberbegriff des Anspruchs 1. Ein solches Stufenwerkzeug ist aus DE 20 2007 015 595 U1 bekannt.

### HINTERGRUND DER ERFINDUN-G

Im Stand der Technik sind Spannfutter zur Aufnahme von Spannzangen zum Einspannen von Werkzeugen, beispielsweise Fräser, Bohrer, Reibahle, Senker, bekannt. Bei Verwendung von Spannzangen zum Einspannen der Werkzeuge wird eine hohe Rundlaufgenauigkeit auch bei hohen Drehzahlen der Werkzeuge ermöglicht.

### ZUSAMMENFASSUNG DER ERFINDUNG

Eine spanende Bearbeitung eines Werkstücks mit mehreren sequentiellen Arbeitsgängen erfordert eine gewisse Bearbeitungszeit. Eine Möglichkeit diese Bearbeitungszeit zu reduzieren kann z.B. das gleichzeitige Abarbeiten von bislang sequentiellen Arbeitsgängen sein.

Eine Aufgabe ist daher, eine Möglichkeit zur Verfügung zu stellen, die eine Bearbeitung eines Werkstücks durch mit Spannzangen eingespannten Werkzeuge erlaubt, wobei bei mehreren erforderlichen Arbeitsgängen eine zeitliche Überlappung bzw. Überschneidung dieser Arbeitsgänge ermöglicht werden soll.

Erfindungsgemäß wird ein Stufenwerkzeug gemäß dem Anspruch 1 zur Verfügung gestellt*.*

Eine Buchse zum Überstülpen bietet in einfacher Weise die Möglichkeit aus einem Spannfutter einen Schneidkopf herzustellen, wodurch ein Stufenwerkzeug erzeugt werden kann

Beispielhafte Ausführungsformen werden in den abhängigen Ansprüchen beschrieben.

Gemäß einer beispielhaften Ausführungsform der Erfindung wird ein Spannzangenfutter zur Verfügung gestellt, wobei die Schneide in der Nähe der Ausnehmung angeordnet ist.

Eine Anordnung der Schneide in einem vorderen Bereich des Spannzangenfutters ermöglicht eine relativ weitgehende zeitliche Überlappung zweier spanender Bearbeitungsvorgänge, wodurch eine Bearbeitungszeit eines Werkstücks verkürzt werden kann.

In einer weiteren erfindungsgemäßen Ausführungsform wird ein Spannzangenfutter zur Verfügung gestellt, wobei die Schneide eine Schneidplatte, insbesondere eine Wechselschneidplatte, ist und/oder wobei die Schneide dreieckig oder viereckig ausgebildet ist.

Eine Schneidplatte bietet den Vorteil des Austausches, wodurch bei abgenutzten Schneiden eine schnellere Einsatzfähigkeit des Spannzangenfutters wiederhergestellt werden kann. Wendeschneidplatten, dreieckig oder viereckig, können die Frist zur Wiederherstellung der Einsatzfähigkeit weiter verkürzen.

Gemäß einem weiteren Ausführungsbeispiel der vorliegenden Erfindung wird ein Stufenwerkzeug zur Verfügung gestellt, wobei die Spannzange fragil ausgebildet ist.

Eine "fragile" Ausbildung ermöglicht das "Platz schaffen" zur Anordnung von einer oder beliebig vieler Schneiden und/oder Spannuten an einem entsprechenden Spannzangenfutter bzw. Stufenwerkzeug.

Gemäß einer beispielhaften Ausführungsform der Erfindung wird ein Stufenwerkzeug zur Verfügung gestellt, wobei die Spannzange entlang einer Längsachse des Stufenwerkzeugs zum Variieren des radialen Abstands der Schneide zur Längsachse verschiebbar ist.

Eine Spannzange, die als Dehnwerkzeug ausgebildet ist, ermöglicht eine Feinjustierung der radialen Position der Schneiden, die an dem Spannzangenfutter angeordnet sind.

In einer weiteren erfindungsgemäßen Ausführungsform wird ein Stufenwerkzeug zur Verfügung gestellt, wobei das Stufenwerkzeug eine Hülse umfasst, wobei die Hülse zwischen Spannzange und Spannzangenfutter angeordnet ist.

Eine Hülse zwischen Spannzange und Spannzangenfutter ermöglicht eine feinere Einstellung des radialen Abstands der Schneide zur Längsachse des Stufenwerkzeugs an dem Spannzangenfutter, da die Hülse ein allmähliches Gleiten von Spannzange zu Spannzangenfutter ermöglicht.

Gemäß einem weiteren Ausführungsbeispiel der vorliegenden Erfindung wird ein Stufenwerkzeug zur Verfügung gestellt, wobei die Hülse aus Kupfer, Messing, Kunststoff, Gummi oder einer sonstigen Plastikart besteht.

Eine Ausbildung der Hülse aus Kupfer, Messing, Kunststoff, Gummi oder einer sonstigen Plastikart ermöglicht eine besonders feine Justierung, da das Kupfer, das Messing, der Kunststoff, das Gummi oder die sonstige Plastikart im besonderen Maße ein "Gleiten" der Spannzange in dem Spannzangenfutter ermöglicht.

Als eine Idee der Erfindung kann angesehen werden, eine Spannzange derart auszubilden, und zwar fragil, dass im vorderen Bereich eines Spannzangenfutters ausreichend Platz verbleibt, um eine oder mehrere Schneiden anordnen zu können. In einer weiteren Ausführungsform kann die Spannzange außerdem dazu genutzt werden, die Scheiden in ihrem radialen Abstand zur Längsachse des Spannzangenfutters zu variieren.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
Figur 1 ein rotierbares Spannzangenfutter in einer Seitenansicht,
Figur 2 das rotierbare Spannzangenfutter aus Figur 1 in einer Vorderansicht,
Figur 3 ein weiteres rotierbares Spannzangenfutter mit einer Spannzange,
Figur 4 eine Spannzange,
Figur 5 die Spannzange in einer Vorderansicht,
Figur 6 ein weiteres rotierbares Spannzangenfutter mit einer eingespannten Reibahle,
Figur 7 einen vorderen Bereich eines Spannzangenfutters,
Figur 8 einen weiteren vorderen Bereich eines Spannzangenfutters,
Figur 9 ein Spannzangenfutter mit einer Spannzange in einem Längsschnitt,
Figur 10 ein Stufenwerkzeug in einem Längsschnitt,
Figur 11 ein Spannzangenfutter in einem Längsschnitt,
Figur 12 eine Spannzange in einem Längsschnitt,
Figur 13 ein weiteres Spannzangenfutter mit einer Spannzange in einem Längsschnitt,
Figur 14 ein weiteres Spannzangenfutter mit einer Spannzange in einem Längsschnitt,
Figur 15 eine Buchse zum Überstülpen über ein weiteres Spannzangenfutter.

### DETAILLIERTE BESCHREIBUNG BEISPIELHAFTER

### AUSFÜHRUNGSFORMEN

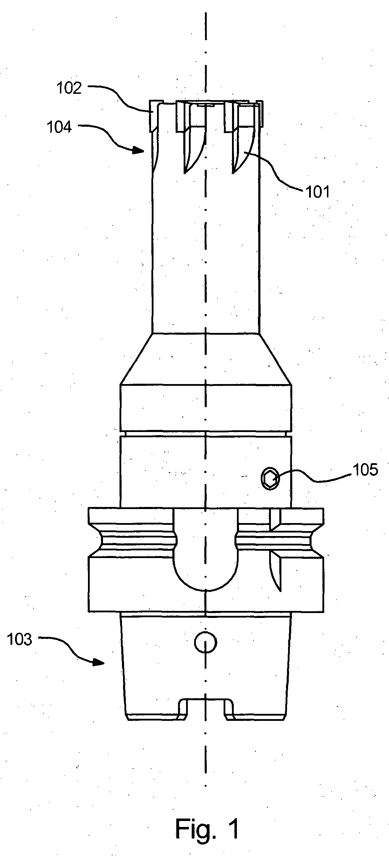

Fig. 1 zeigt ein rotierbares Schneidwerkzeug mit einem Schneidkopf 104, wobei der Schneidkopf 104 Schneiden 102, die als Schneidplatten ausgebildet sein können, und Spannuten 101 aufweisen kann. Das rotierbare Schneidwerkzeug ist mit einer Hohlschaftkegelschnittstelle 103 versehen, um eine Kopplung an eine Motorspindel zu ermöglichen. Das Schneidwerkzeug kann eine vordere Ausnehmung aufweisen, um eine Spannzange aufnehmen zu können. Das Schneidwerkzeug kann daher als Spannzangenfutter verwendet werden, wobei bei Einspannen beispielsweise eines Fräswerkzeugs mittels einer Spannzange in das Schneidwerkzeug ein Stufenwerkzeug darstellbar ist. Eine erfindungsgemäße Spannzange kann in einer alternativen Ausführungsform "schmaler", bzw. mit "weniger Fleisch", bzw. weniger stabil, also fragil, ausgebildet sein, d.h. dass die Dicke des Materials der Spannzange von innerem Radius zu äußerem Radius geringer ist im Vergleich zu Spannzangen des Stands der Technik, wodurch Bauraum am Spannzangenfutter gewonnen werden kann. Hierdurch können Schneidplatten und Spannuten an dem Spannzangenfutter angeordnet werden, wodurch sich ein Stufenwerkzeug ergeben kann. Die Schneiden 102 können aus PKD oder CBN bestehen und am Schneidkopf 104 an- oder eingelötet werden. In einer alternativen Ausführungsform können die Schneiden 102 als Wechselplatten ausgebildet sein.

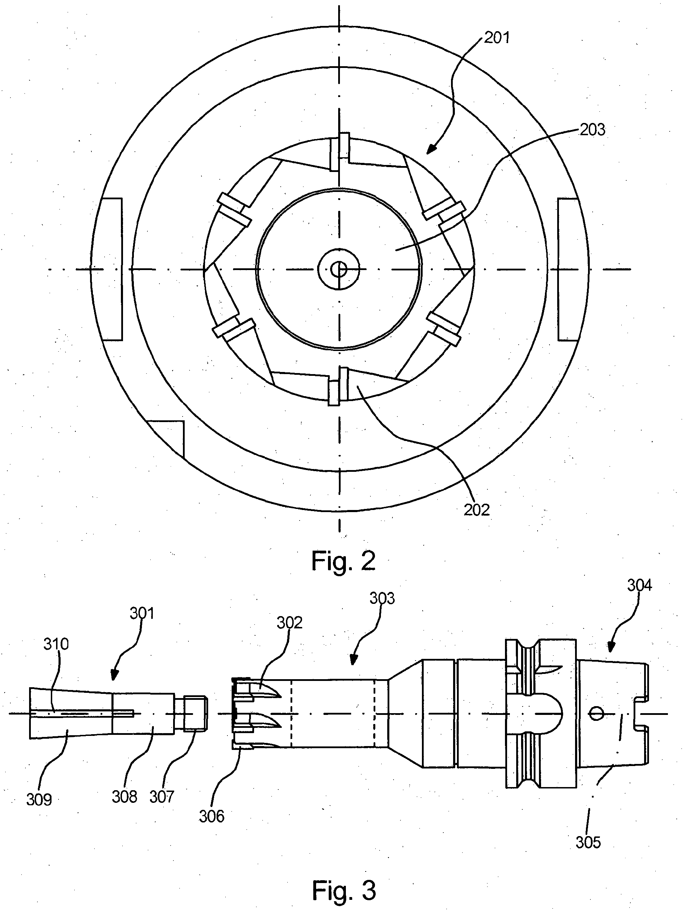

Fig. 2 zeigt ein rotierbares Schneidwerkzeug mit einem Schneidkopf 201, wobei der Schneidkopf 201 Schneiden, die als Schneidplatten 202 ausgeformt sein können, aufweisen kann. Außerdem ist eine Ausnehmung 203 dargestellt, in die eine Spannzange eingesetzt werden kann.

Fig. 3 zeigt ein Schneidsystem mit einem Spannzangenfutter 303, das gleichzeitig als Schneidwerkzeug genutzt werden kann, wobei das Spannzangenfutter 303 Schneidplatten 306 und Spannuten 302 zur spanenden Bearbeitung eines Werkstücks vorsehen kann. Das Spannzangenfutter 303 kann eine Ausnehmung aufweisen, in die eine Spannzange 301 eingeführt werden kann. Die Spannzange 301 dient dazu, ein Werkzeug z.B. einen Bohrer, einen Fräser, eine Reibahle oder einen Senker oder ein sonstiges Werkzeug einspannen zu können. Ferner ist ein Spalt 310 dargestellt, der beim Einspannen eines eingesetzten Werkzeugs zumindest teilweise zusammengepresst werden kann.

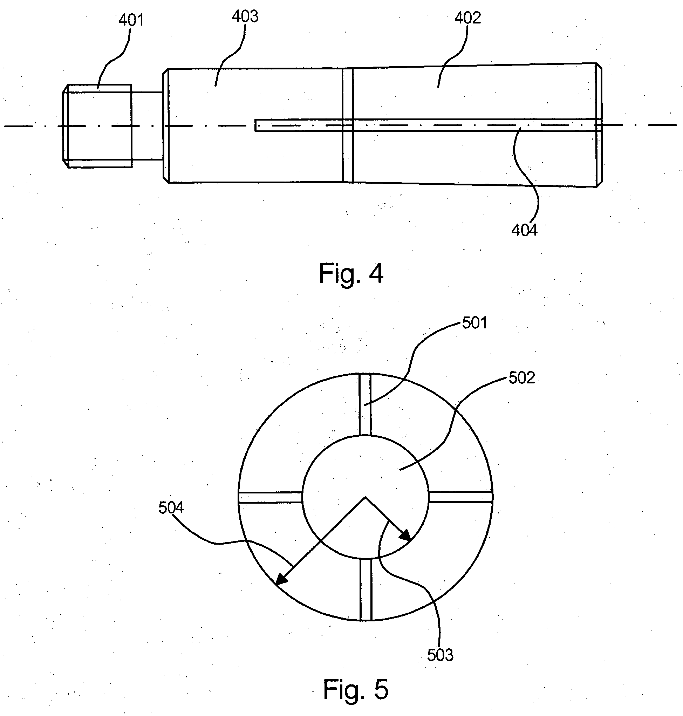

Fig. 4 zeigt eine Spannzange in einer seitlichen Darstellung, wobei von rechts in die Spannzange ein Werkzeug, z.B. ein Bohrer, ein Fräser, eine Reibahle, ein Senker oder ein sonstiges Werkzeug eingeführt werden kann. Die Spannzange weist ein Außengewinde 401 zum Fixieren innerhalb eines Spannzangenfutters und einen zylindrischen Abschnitt 403 auf. Ferner ist ein Spalt 404 dargestellt, der beim Einspannen eines eingesetzten Werkzeugs zumindest teilweise zusammengepresst werden kann.

Fig. 5 zeigt eine Spannzange in einer Vorderansicht mit einer Ausnehmung 502 in die ein Werkzeug, z.B. ein Bohrer, ein Fräser, eine Reibahle, ein Senker oder ein sonstiges Werkzeug eingesetzt werden kann, und Spalten 501, die zusammengedrückt werden können, wodurch das eingesetzte Werkzeug eingespannt werden kann. Dargestellt ist ferner ein innerer Radius 503 und ein äußerer Radius 504. Erfindungsgemäß kann die Differenz zwischen dem äußeren Radius 504 und dem inneren Radius 503 im Vergleich zu Spannzangen des Stands der Technik relativ klein gewählt werden, wodurch die Ausnehmung zur Aufnahme der Spannzange in einem entsprechenden Spannzangenfutter ebenfalls klein ausfallen kann. Hierdurch kann freier Platz bzw. Raum auf dem Spannzangenfutter gewonnen werden, der zur Anordnung von Schneiden und/oder Spannuten genutzt werden kann. Eine fragilere Ausführungsform einer Spannzange ermöglicht daher die Ausbildung eines Spannzangenfutters als Schneidkopf. Eine Spannzange kann in alternativen Ausführungsformen vier Spalten 501 oder drei Spalten aufweisen.

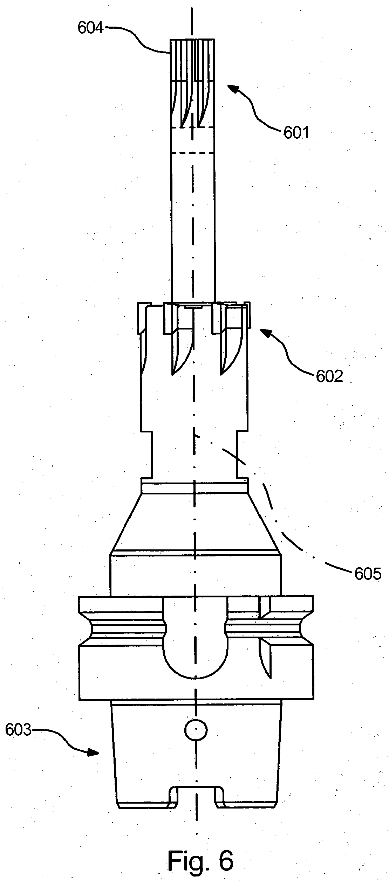

Fig. 6 zeigt ein Stufenwerkzeug, wobei ein Werkzeug 601, z.B. eine Reibahle, in einer Spannzange angeordnet ist und die Spannzange in einem Spannzangenfutter 602 eingespannt ist. Das Spannzangenfutter 602 weist eine oder mehrere Schneiden, z.B. Schneidplatten, insbesondere Wechselschneidplatten, auf. Daher wird das Spannzangenfutter 602 als Schneidwerkzeug ausgebildet, wodurch insgesamt ein Stufenwerkzeug erhalten werden kann.

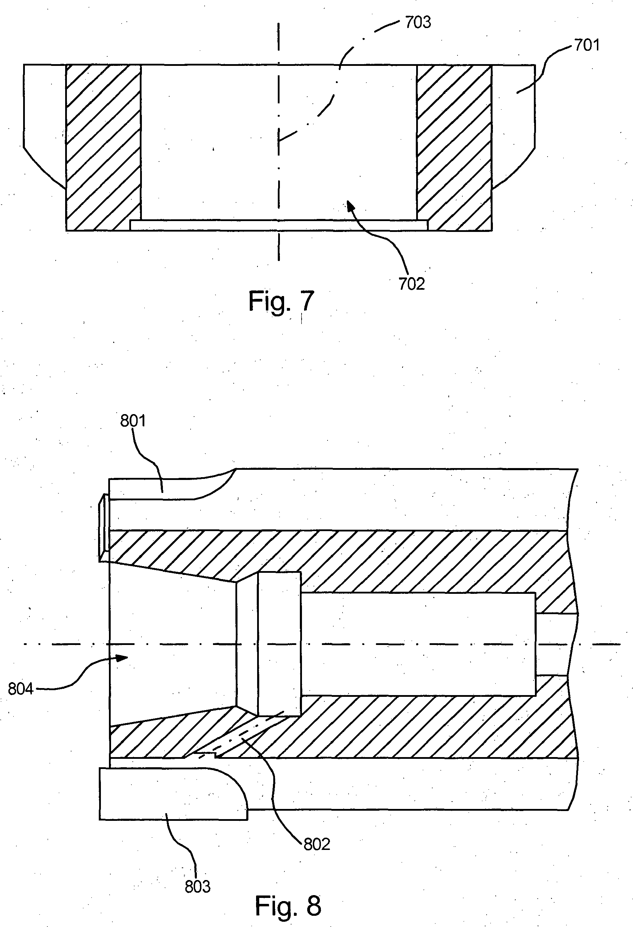

Fig. 7 zeigt einen vorderen Bereich eines Spannzangenfutters mit einer Ausnehmung 702 für Spannzangen, wobei das Spannzangenfutter Schneiden 701 aufweisen kann.

Fig. 8 zeigt einen vorderen Bereich eines Spannzangenfutters mit einer Ausnehmung 804 zur Aufnahme von Spannzangen, wobei das Spannzangenfutter Schneiden 803 und Spannuten 801 aufweisen kann. Ferner ist ein Kühlmittelkanal 802 zur Versorgung der Schneide 803 mit Kühl- und/oder Schmiermittel dargestellt.

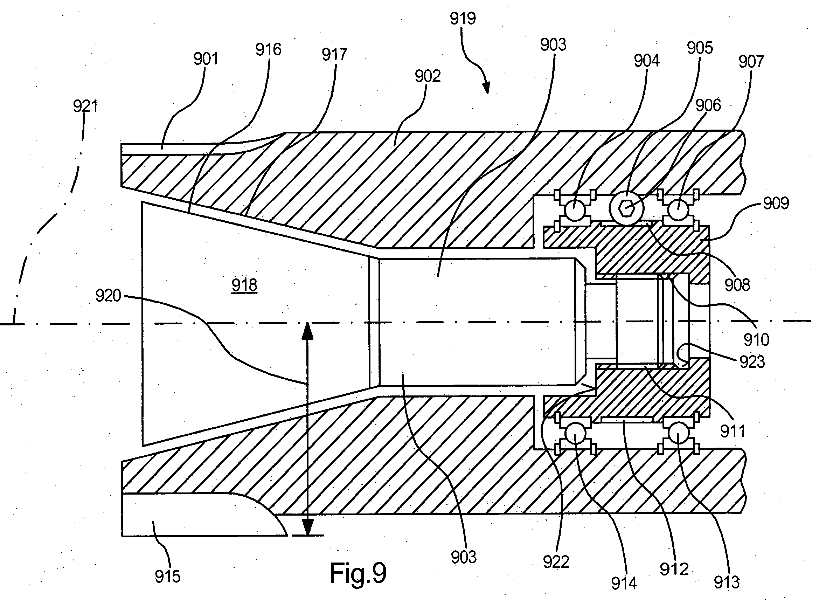

Fig. 9 zeigt ein Schneidsystem mit einem Schneidkopf 919, der als Spannzangenfutter verwendet werden kann, und eine Spannzange 918. Die Spannzange 918 kann als Dehnwerkzeug eingesetzt werden. Das Dehnwerkzeug 918 kann dabei einen Außenkonus 916 aufweisen, der an einen Innenkonus 917 der Ausnehmung des Schneidkopfs 919 anliegen kann. Wird das Dehnwerkzeug/ die Spannzange 918 weiter in das Spannzangenfutter/ den Schneidkopf 919 hineingezogen, so kann der radiale Abstand 920 der Schneiden 915, bzw. der Schneidplatten, von der Längsachse 921, die am Schneidkopf/am Spannzangenfutter 919 angeordnet sind, verändert, nämlich erhöht werden. Wird die Spannzange 918 weiter nach links verschoben, d.h. aus der Ausnehmung des Schneidkopfs 919 herausgefahren, so kann der radiale Abstand 920 der Schneiden 915 von der Längsachse 921 verkleinert werden. Auf diese Weise kann eine Justierung (Feinjustierung) des radialen Abstands 920 der Schneiden 915/Schneidplatten/ Spannuten 901 bezüglich der Längsachse 921 vorgenommen werden.

Das Dehnwerkzeug 918 kann ferner ein Außengewinde 911 aufweisen, dessen Zähne in Zähne eines Innengewindes 910 eingreifen können. Das Innengewinde 910 kann an einem Schneckenrad 909 angeordnet sein, wobei das Schneckenrad 909 Teil eines Schneckengetriebes sein kann. Das Schneckengetriebe kann das Schneckenrad 909 mit Zähnen 908, 912 und eine Schnecke 905 umfassen, wobei die Zähne der Schnecke 905 in die Zähne 908, 912 des Schneckenrads 909 eingreifen können. Das Schneckengetriebe kann innerhalb des Schneidkopfs 919 über Wälzlager 904, 907, 913, 914 gelagert sein, wobei die Wälzlager 904, 907, 913, 914 als Kugellager ausgebildet sein können. Die Schnecke 905 kann z.B. einen Innensechskant (Inbus) 906, einen Schlitz, einen Kreuzschlitz, einen Torx, einen Vierkant oder eine sonstige Eingriffsmöglichkeit aufweisen. In den Eingriff 906 der Schnecke 905 kann z.B. ein Steckschlüssel eingesetzt werden, wobei durch eine Drehung des Steckschlüssels die Schnecke 905 und dadurch auch das Schneckenrad 909 gedreht bzw. in Rotation gebracht werden kann. Hierdurch kann das Dehnwerkzeug 918 nach links herausgefahren werden bzw. nach rechts hinein verfahren werden, wobei das Dehnwerkzeug 918 mit seinem Außenkonus 916 gegen den Innenkonus 917 gepresst werden kann, wodurch der radiale Abstand 920 der Schneidplatte 915 von der Längsachse 921 vergrößert bzw. verkleinert werden kann. Die Kante 922 des Schneckenrads 909 kann als Anschlag für den zylindrischen Abschnitt 903 des Dehnwerkzeugs 918 genutzt werden, um ein Überdehnen des Schneidenkopfs 919 und einen möglichen Bruch zu verhindern. Die Kante 923 des Schneckenrads 909 kann als Anschlag für den Vorsprung des Dehnwerkzeugs 918 mit seinem Außengewinde 911 genutzt werden. Aufgrund der Anordnung eines Schneckengetriebes mit seinem Schneckenrad 909 und der Schnecke 905 wird kein Drehmoment auf das Dehnwerkzeug 918 übertragen. Deswegen kann sich auch kein Rotieren des Dehnwerkzeugs 918 um seine Längsachse 921 ergeben. Eine Verdrehsicherung, um eine Rotation vermeiden zu können, kann daher entfallen.

In einem alternativen Beispiel, bei dem durch zusätzliche Umstände ein Drehmoment auf das Dehnwerkzeug 918 übertragen werden kann, kann eine Verdrehsicherung dadurch am Schneidsystem angeordnet werden, dass ein Stift in die Ausnehmung des Schneidkopfs 919 hineinragt und in einer Nut, die am Dehnwerkzeug 918 angebracht ist, geführt werden kann. Hierdurch kann ein Drehen des Dehnwerkzeugs 918 um seine eigene Längsachse 921 vermieden werden.

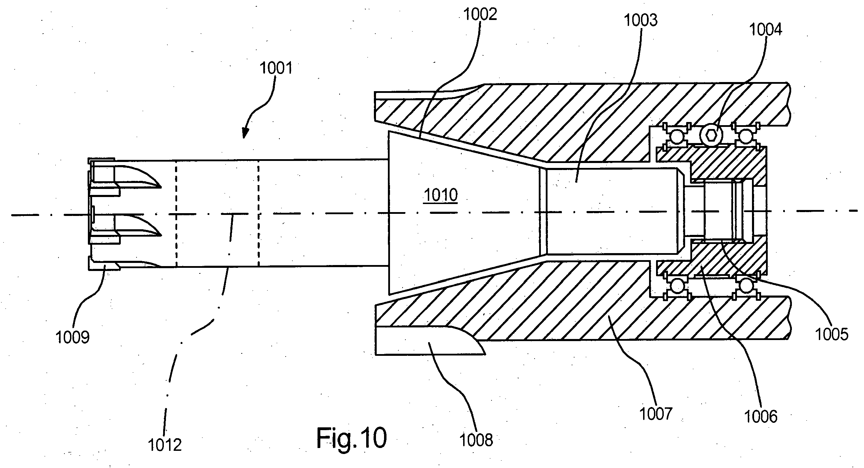

Fig. 10 zeigt eine Stufenreibahle mit ersten Schneidplatten 1008 und zweiten Schneidplatten 1009. Die Reibahle 1001 ist dabei durch die Spannzange 1010 in das Spannzangenfutter 1007 eingespannt, wobei das Spannzangenfutter 1007 auch Schneiden 1008 und Spannuten aufweisen kann, wodurch das Spannzangenfutter 1007 auch als Schneidkopf wirken kann. Die Spannzange 1010 kann auch als Dehnwerkzeug genutzt werden, um den radialen Abstand der Schneiden 1008 des Schneidkopfs 1007 einstellen (justieren) zu können.

Der radiale Abstand der ersten Schneidplatten 1008 von der Längsachse 1012 des Schneidkopfs 1007 kann durch das Dehnwerkzeug 1010 eingestellt werden, wobei das Dehnwerkzeug 1010 mittels eines Schneckengetriebes mit einem Schneckenrad 1006 und einer Schnecke 1004 nach links oder nach rechts verfahren werden kann. Wird das Dehnwerkzeug 1010 nach rechts verfahren, so können die Schneidplatten 1008 weiter radial nach außen gepresst werden. Das Dehnwerkzeug 1010 kann außer einem Außenkonus 1002 und einem zylindrischen Abschnitt 1003 einen weiteren Schneidkopf 1001 mit weiteren Schneidplatten 1009 aufweisen, wodurch z.B. eine zweistufige Reibahle realisiert werden kann. In einem alternativen Beispiel kann in die weitere Reibahle ein weiteres Dehnwerkzeug mit noch weiterer Reibahle eingesetzt werden, wodurch eine 3-stufige Reibahle ermöglicht werden kann. Das weitere Dehnwerkzeug kann ebenfalls als Spannzange ausgebildet sein. In weiteren altemativen Beispielen können Reibahle mit beliebig vielen Stufen zur Verfügung gestellt werden.

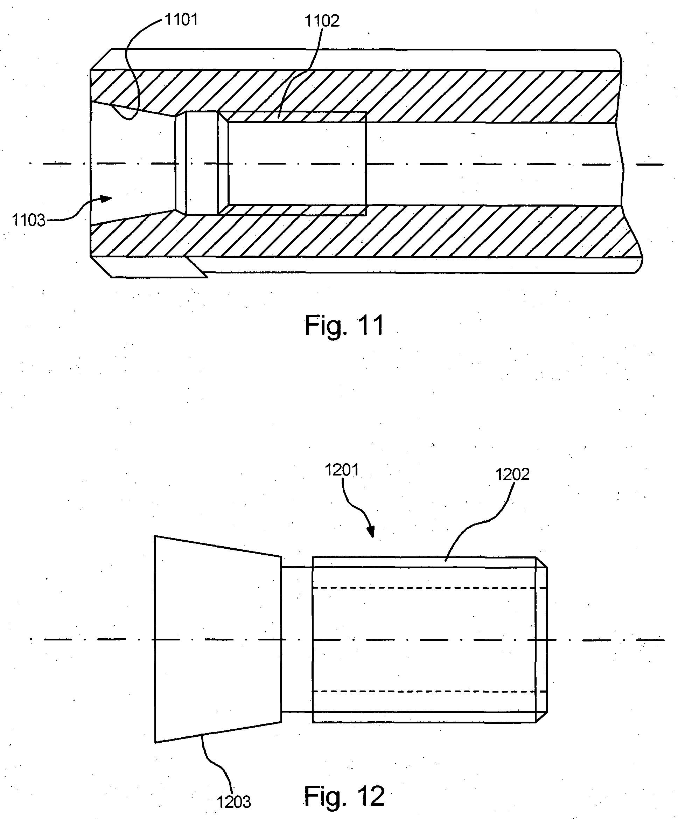

Fig. 11 zeigt den Schneidkopf 1007 der Fig. 10 in einem Längsschnitt, wobei der Schneidkopf eine Ausnehmung 1103 aufweist, die einen Innenkonus 1101 und einen zylindrischen Abschnitt mit einem Innengewinde 1102 umfassen kann, in die eine Spannzange eingesetzt werden kann.

Fig. 12 zeigt ein Dehnwerkzeug 1201 mit einem Außenkonus 1203 und einem zylindrischen Abschnitt mit Außengewinde 1202, wobei das Dehnwerkzeug 1201 in die Ausnehmung 1103 des Schneidkopfs der Fig. 11 eingesetzt werden kann. Das Dehnwerkzeug 1201 kann mit seinem Außengewinde 1202 in das Innengewinde 1102 des Schneidkopfs der Fig. 11 eingeschraubt werden, wodurch der Außenkonus 1203 am Innenkonus 1101 zu liegen kommen kann. Durch ein weiteres Einschrauben des Dehnwerkzeugs 1201 in die Ausnehmung 1103 des Schneidkopfs der Fig. 11 kann der Schneidkopf aufgeweitet werden. Das Dehnwerkzeug 1201 kann am rechten Ende einen Eingriff z.B. für einen Steckschlüssel aufweisen, um das Dehnwerkzeug 1201 in den Schneidkopf der Fig. 11 einschrauben zu können, wobei der Eingriff z.B. als Innensechskant ausgebildet sein kann. Der Schneidkopf der ersten Stufe, der zweiten Stufe, mehrerer Stufen oder aller Stufen einer Stufenreibahle oder eines sonstigen Stufenwerkzeugs kann mit einem Dehnwerkzeug nach Fig. 12 aufgeweitet werden, wobei das. Dehnwerkzeug auch als Spannzange ausgebildet sein kann.

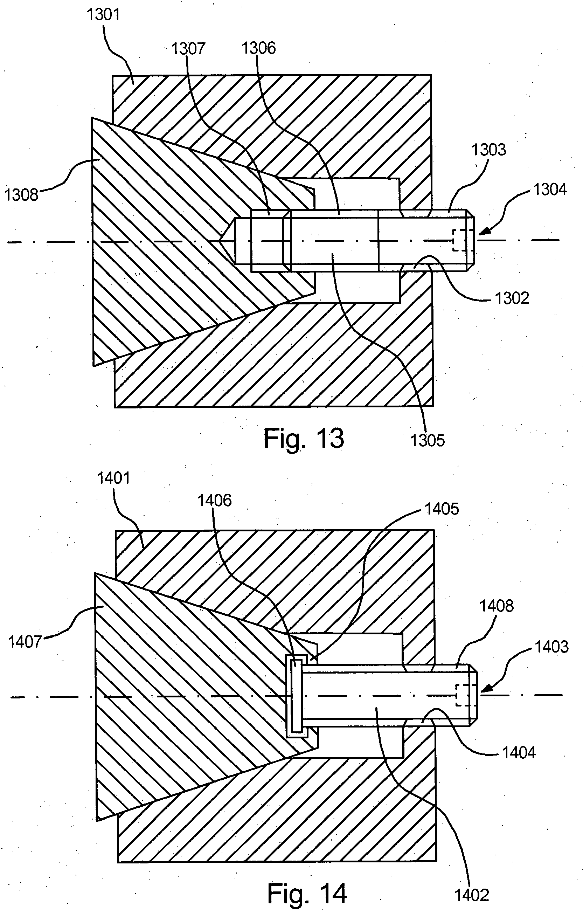

Fig. 13 zeigt ein alternatives Beispiel mit einem Gewindebolzen 1305 mit einem Differentialgewinde (Differenzgewinde), auf dem zwei Bereiche mit unterschiedlichen Gewinden 1303, 1306 angeordnet sind. Ein erstes Außengewinde 1306 des Gewindebolzens 1305 kann in ein passendes Innengewinde 1307 eines Dehnwerkzeugs/einer Spannzange 1308 eingreifen und ein zweites Außengewinde 1303 des Gewindebolzens 1305 kann in ein passendes Innengewinde 1302 des Schneidkopfs 1301 eingreifen. Die Außengewinde 1303, 1306 können unterschiedliche Steigungen aufweisen. Der Gewindebolzen 1305 kann einen Innensechskant 1304 aufweisen, in den beispielsweise ein Steckschlüssel eingreifen kann. Eine Drehung des Steckschlüssels führt aufgrund der unterschiedlichen Gewindetypen zu einer rein translatorischen Bewegung des Dehnwerkzeugs 1308 in Richtung der Längsachse des Dehnwerkzeugs 1308 (keine Rotation des Dehnwerkzeugs 1308 um die eigene Achse).

Fig. 14 zeigt ein weiteres alternatives Beispiel eines Dehnwerkzeugs 1407/ einer Spannzange in einem Schneidkopf 1401, wobei das Außengewinde 1408 eines Gewindebolzens 1402 in das Innengewinde 1404 des Schneidkopfs 1401 eingreifen kann. Der Gewindebolzen 1402 kann einen Kopf 1406 aufweisen, der in einer Ausnehmung des Dehnwerkzeugs 1407 gelagert sein kann, wobei der Kopf 1406 derart gelagert sein kann, dass der Kopf 1406 innerhalb der Ausnehmung frei rotieren kann. Durch einen Vorsprung 1405 kann das Herausspringen des Kopfes 1406 aus der Ausnehmung verhindert werden. Der Kopf 1406 kann als Nase und/oder stabförmig ausgebildet sein, wobei der Kopf 1406 stets so ausgebildet ist, dass der Vorsprung 1405 ein Herausfahren des Kopfes 1406 aus der Ausnehmung des Dehnwerkzeugs 1407 verhindern kann. Der Gewindebolzen 1402 kann einen Innensechskant zum Eingriff für einen Steckschlüssel aufweisen, wobei der Steckschlüssel dazu genutzt werden kann, den Gewindebolzen 1402 zu drehen. Eine Drehbewegung des Gewindebolzens 1402 kann zu einer rein translatorischen Bewegung des Dehnwerkzeugs 1407 in Richtung der Längsachse des Dehnwerkzeugs 1407 führen, wobei sich das Dehnwerkzeug 1407 aufgrund der Lagerung des Kopfes 1406 innerhalb der Ausnehmung des Dehnwerkzeugs 1407, die eine beliebige Rotation des Kopfs 1406 ohne Mitnahme des Dehnwerkzeugs 1407 ermöglichen kann, nicht drehen muss.

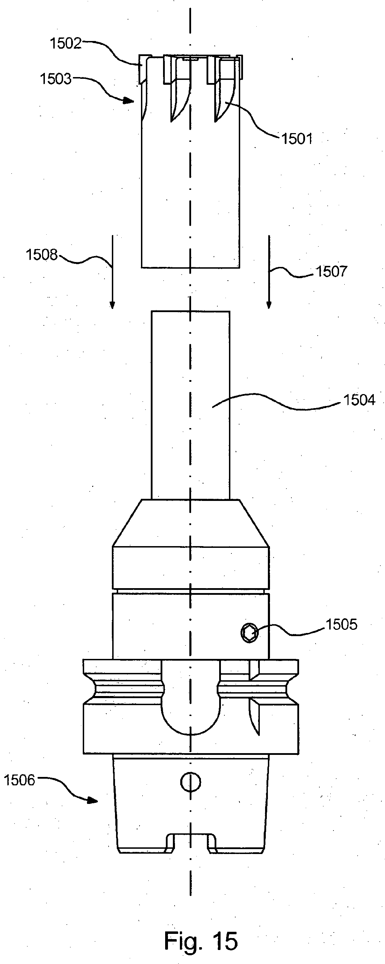

Fig. 15 zeigt ein Spannzangenfutter mit einer Aufnahme 1504 für Spannzangen, das einen Eingriff 1505 für z.B. einen Steckschlüssel zum Anziehen einer eingesetzten Spannzange aufweist. Über die Aufnahme 1504 des Spannzangenfutters kann eine Buchse 1503 übergestülpt werden (siehe Pfeile 1507, 1508), wobei die Buchse 1503 eine oder mehrere Schneiden 1502 und/oder eine oder mehrere Spannuten 1501aufweisen kann..

In einem weiteren Beispiel kann eine Hülse zwischen Hohlschaftkegel des Schneidkopfs/des Spannzangenfutters und Außenkonus des Dehnwerkzeugs/der Spannzange vorgesehen sein, wobei die Hülse dazu führen kann, dass ein besseres Gleiten von Dehnwerkzeug und Schneidkopf ermöglicht werden kann. Hierdurch kann ein genaueres und reproduzierbareres Einstellen des radialen Abstands der Schneidplatten zur Längsachse des Werkzeugs ermöglicht werden. Insbesondere kann hierdurch ein Verhaken von Außenkonus mit dem Hohlschaftkegel des Schneidkopfs vermieden werden, wodurch ruckartige Bewegungen zwischen Dehnwerkzeug und Schneidkopf verhindert werden können. Die Hülse kann aus einem härterem oder aus einem weicheren Material im Vergleich zum Außenkonus und/oder zum Schneidkopf bestehen. Insbesondere kann die Hülse aus Kupfer, Messing, Kunststoff, Gummi oder einer sonstigen Plastikart bestehen. Ein besonders gutes Gleiten von Dehnwerkzeug und Schneidkopf kann insbesondere durch die Wahl des Materials der Hülse ermöglicht werden, wobei Kupfer, Messing, Kunststoff, Gummi oder eine sonstige Plastikart in dieser Beziehung besonders vorteilhaft erscheinen. Durch die Steigung der kegelförmigen Süßen- oder Innenmantelfläche der Hülse kann auch bestimmt werden, wie fein bzw. wie stark eine Veränderung des radialen Abstands der Schneiden des Schneidkopfs von der Längsachse einstellbar ist. Ist der Außen- oder Innenkegelwinkel klein, kann eine sehr feine Einstellung ermöglicht werden. Bei einem größeren Kegelwinkel wird eine grobe Einstellung ermöglicht.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 101: Spannut
- 102: Schneide
- 103: Hohlschaftkegelschnittstelle
- 104: Spannzangenfutter
- 105: Eingriff für Steckschlüssel
- 201: Spannzangenfutter
- 202: Schneide
- 203: Ausnehmung zur Aufnahme einer Spannzange
- 301: Spannzange
- 302: Spannut
- 303: Spannzangenfutter
- 304: Hohlschaftkegelschnittstelle
- 305: Längsachse
- 306: Schneide
- 307: Außengewinde
- 308: zylindrischer Abschnitt
- 309: Außenkonus
- 310: Spalt
- 401: Außengewinde
- 402: Außenkonus
- 403: zylindrischer Abschnitt
- 404: Spalt
- 501: Spalt
- 502: Ausnehmung zur Aufnahme eines Werkzeugs
- 503: innerer Radius
- 504: äußerer Radius
- 601: Werkzeug
- 602: Spannzangenfutter
- 603: Hohlschaftkegelschnittstelle
- 604: Schneide
- 701: Schneide
- 702: Ausnehmung zur Aufnahme einer Spannzange
- 703: Längsachse
- 801: Spannut
- 802: Kühlmittelkanal
- 803: Schneide
- 804: Ausnehmung zur Aufnahme einer Spannzange
- 901: Spannut
- 902: Schneidkopf
- 903: zylindrischer Abschnitt
- 904: Wälzlager
- 905: Schnecke
- 906: Innensechskant
- 907: Wälzlager
- 908: Zähne
- 909: Schneckenrad
- 910: Innengewinde
- 911: Außengewinde
- 912: Zähne
- 913: Wälzlager
- 914: Wälzlager
- 915: Schneide
- 916: Außenkonus
- 917: Innenkonus
- 918: Dehnwerkzeug/Spannzange
- 919: Schneidkopf
- 920: radialer Abstand
- 921: Längsachse
- 922: Anschlag
- 923: Anschlag
- 1001: Schneidkopf
- 1002: Außenkonus
- 1003: zylindrischer Abschnitt
- 1004: Schnecke
- 1005: Außengewinde
- 1006: Schneckenrad
- 1007: Schneidkopf
- 1008: Schneide
- 1009: Schneide
- 1010: Dehnwerkzeug/Spannzange
- 1101: Innenkonus
- 1102: Innengewinde
- 1103: Ausnehmung
- 1201: Dehnwerkzeug/Spannzange
- 1202: Außengewinde
- 1203: Außenkonus
- 1301: Schneidkopf
- 1302: Innengewinde
- 1303: Außengewinde
- 1304: Innensechskant
- 1305: Gewindebolzen
- 1306: Außengewinde
- 1307: Innengewinde
- 1308: Dehnwerkzeug/Spannzange
- 1401: Schneidkopf
- 1402: Gewindebolzen
- 1403: Innensechskant
- 1404: Innengewinde
- 1405: Vorsprung
- 1406: Scheibe
- 1407: Dehnwerkzeug/Spannzange
- 1408: Außengewinde
- 1501: Spannut
- 1502: Schneide
- 1503: Buchse
- 1504: Aufnahme für Spannzange
- 1505: Eingriff für Steckschlüssel
- 1506: Hohlschaftkegelschnittstelle
- 1507: Richtung zum Überstülpen
- 1508: Richtung zum Überstülpen

## Patentansprüche

1. Stufenwerkzeug zur spanenden Bearbeitung eines Werkstücks, umfassend
ein Werkzeug zur spanenden Bearbeitung,
eine Spannzange (301) zum Einspannen des Werkzeugs und
ein Spannzangenfutter (1504), umfassend eine Ausnehmung zur Aufnahme der Spannzange (301), wobei die Spannzange (301) entlang der Längsachse (305) des Spannzangenfutters (1504) zum Variieren des radialen Abstands einer Schneide (1502) zur Längsachse (305) verfahrbar ist,
**dadurch gekennzeichnet, dass**
das Stufenwerkzeug eine Buchse (1503) zum Überstülpen über das Spannzangenfutter (1504) umfasst, wobei die Buchse (1503) die eine oder beliebig viele Schneiden (1502) und eine oder beliebig viele Spannuten (1501) aufweist.

2. Stufenwerkzeug nach Anspruch 1, **dadurch gekennzeichnet, dass** die Schneid (1502) in der Nähe der Ausnehmung angeordnet ist.

3. Stufenwerkzeug nach einem der Ansprüche 1 oder 2, **dadurch gekennzeichnet, dass** die Schneide (1502) eine Schneidplatte, insbesondere eine Wendeschneidplatte, ist und/oder wobei die Schneide dreieckig oder viereckig ausgebildet ist.

4. Stufenwerkzeug nach einem der vorhergehenden Ansprüche, **dadurch gekennzeichnet, dass** die Spannzange (301) fragil ausgebildet ist.

5. Stufenwerkzeug nach einem der vorhergehenden Ansprüche, **dadurch gekennzeichnet, dass** das Stufenwerkzeug eine Hülse umfasst, wobei die Hülse zwischen Spannzange und Spannzangenfutter angeordnet ist.

6. Stufenwerkzeug nach Anspruch 5, **dadurch gekennzeichnet, dass** die Hülse aus Kupfer, Messing, Kunststoff, Gummi oder einer sonstigen Plastikart besteht.

## Claims

1. Progressive die for the chipping machining of workpieces comprising
a chipping/machining tool,
a collet chuck (301) to hold the tool and
a collet chuck lining (1504) composing a recess for the insertion of the collet chuck (301) whereby the collet chuck (301) is engineered to auto-travel along the longitudinal axis (305) of the collet chuck lining (1504) thus adjusting the radial distance between a cutting edge (1502) and the longitudinal axis (305),
**characterised in that**
the progressive die comprises a socket (1503), which slips over the collet chuck lining (1504), whereby the socket (1503) has either one or any number of cutting edges (1502) and either one or any number of flutes (1501).

2. Progressive die according to claim 1 **characterised in that**
the cutting edge (1502) is located close to the flute.

3. Progressive die according to claim 1 or 2 **characterised in that**
the cutting edge (1502) is a cutting plate, in particular, a reversible cutting insert, and/or the cutting edge is either triangular or four-sided.

4. Progressive die according to one of the preceding claims **characterised in that** the collet chuck (301) is designed to be fragile.

5. Progressive die according to one of the preceding claims **characterised in that**
the progressive die comprises a sleeve, which is located between the collet chuck and the collet chuck lining.

6. Progressive die according to claim 5 **characterised in that**
the sleeve is made of copper, brass, plastic, rubber or some type of plastic.

## Revendications

1. Outil à transfert destiné à l'usinage de pièce avec enlèvement de copeaux comprenant
un outil pour l'usinage avec enlèvement de copeaux
une pince de serrage (301) pour fixer l'outil et
un mandrin à pinces (1504) comprenant une cavité pour accueillir la pince de serrage (301) où la pince de serrage (301) est déplaçable le long de l'axe longitudinal (305) du mandrin à pinces (1504) pour faire varier la distance radiale d'une lame (1502) avec l'axe longitudinal (305)
**caractérisé par le fait que**
l'outil à transfert comprend une douille (1503) pour l'enfiler sur le mandrin à pinces (1504), où la douille (1503) comporte une ou plusieurs lames (1502) et une ou plusieurs encoches (1501).

2. Outil à transfert selon la revendication 1 **caractérisé par le fait que** la lame (1502) est disposée à côté de la cavité.

3. Outil à transfert selon la revendication 1 ou 2 **caractérisé par le fait que** la lame (1502) est une plaquette de coupe, plus exactement une plaquette de coupe amovible et où la lame a la forme d'un triangle ou d'un rectangle.

4. Outil à transfert selon l'une des revendications précédentes **caractérisé par le fait que** la pince de serrage (301) est conçue de manière fragile.

5. Outil à transfert selon l'une des revendications précédentes **caractérisé par le fait que** l'outil à transfert comprend un manchon qui est placé entre la pince de serrage et le mandrin à pinces.

6. Outil à transfert selon la revendication 5, **caractérisé par le fait que** le manchon est fabriqué en cuivre, en laiton, en plastique, en caoutchouc ou en tout autre type de matériau plastique.
